# EUROPEAN PATENT SPECIFICATION

(11) **EP 1 967 772 B1**
(45) Date of publication and mention of the grant of the patent: **26.09.2012**
(21) Application number: 08250754.2
(22) Date of filing: 05.03.2008
(51) Int. Cl.: F16H 63/42, F16H 61/02

(54) **Gear shift indicator and gear shift indication method for transmission**
Gangschaltungsindikator und Gangschaltungsindikatorverfahren für Getriebe
Indicateur de changement de vitesse et procédé d'indication de changement de vitesse pour transmission

(30) Priority: 05.03.2007 JP 2007054484
(43) Date of publication of application: 10.09.2008
(73) Proprietor: Toyota Jidosha Kabushiki Kaisha, Aichi-ken 471-8571 (JP)
(72) Inventor: Kinoshita, Tomonori, Toyota-shi, Aichi-ken 471-8571 (JP)
(74) Representative: Albutt, Anthony John

(56) References cited:
- EP-A2- 1 253 354
- WO-A1-2006/068301
- DE-A1- 3 912 359
- JP-A- 4 210 159
- JP-A- 2006 307 877

## Description

### BACKGROUND OF THE INVENTION

### 1. Field of the Invention

The present invention relates to a gear shift indicator, claimed in claim 1, and a gear shift indication method for a transmission, claimed in claim 11. More specifically, the present invention relates to a technology that indicates a gear shift in consideration of a fuel consumption amount when fuel addition is performed to regenerate a purifier that purifies- exhaust gas from an engine.

### 2. Description of the Related Art

A manual transmission that shifts gears according to an operation of a driver is well known. In the manual transmission, the driver can select any gear (gear ratio). Therefore, the gear selected by the driver is not always the best in regard to the vehicle fuel consumption (fuel economy). Accordingly, there is a vehicle provided with a GSI (Gear Shift Indicator) that indicates to the driver a gear shift to the gear determined in consideration of fuel consumption, or the like.

Japanese Patent Application Publication No. 2006-307877 (JP-A-2006-307877) constitutes the closest prior art and describes a shift indication method for a transmission that makes a driver select the optimal gear position according to travel conditions of a vehicle provided with a diesel engine, a manual transmission, and a diesel particulate filter (DPF). In the shift indication method described in JP-A-2006-307877, it is determined whether the diesel particulate filter is being regenerated or not. When it is determined that the diesel particulate filter is being regenerated, a first map for regular travel establishing a base gear position according to vehicle speed is changed over to a second map in which up-shift of the base gear position is shifted to a low vehicle speed side according to vehicle speed to calculate a target gear position according to vehicle speed. The target gear position is calculated by correcting the base gear position according to a fuel injection quantity, an engine rotation speed and vehicle acceleration. An up-shift is indicated if the target gear position is higher than an actual gear position and a downshift is indicated if the target gear position is lower than the actual gear position

According to the shift indication method described in JP-A-2006-307877, during the regeneration of DPF, the base gear position is calculated according to the vehicle speed using the map in which the up-shift of the base gear position is shifted to the low vehicle speed side from that used during the regular traveling period. Therefore, while the regeneration of DPF is performed efficiently, the best gear position, in which the fuel economy is optimum, is indicated to the driver. At this time, if the up-shift is prompted earlier while the fuel economy (performance) is sacrificed to a certain extent, the temperature of the exhaust gas is increased to burn the particulate matters (PM) trapped by the DPF and the regeneration of DPF may be completed more rapidly (facilitated).

Meanwhile, when the purifier, such as a DPF or a DPNR (Diesel Particulate-NOx Reduction system), that purifies the exhaust gas from an engine by post-processing PM and NOx is regenerated, fuel addition, which adds fuel more than that required by vehicle traveling, may not always required. For example, when the temperature of the exhaust gas is high, no fuel addition is required for the regeneration process. In the JP-A-2006-307877, however, when it is determined that the DPF is being regenerated, the first map, in which the base gear position is set based on vehicle speed during regular traveling, is changed over to the second map, in which the up-shift of the base gear position is shifted to the low vehicle speed side according to the vehicle speed. Accordingly, an up-shift may be prompted earlier, even in the case where no fuel addition is required for the regeneration process. In this case, fuel may be consumed more than necessary.

### SUMMARY OF THE INVENTION

The present invention provides a gear shift indicator and a gear shift indication method for a transmission that indicate a gear shift to the gear that reduces a fuel consumption amount.

A first aspect of the present invention provides a gear shift indicator of a transmission in which a gear is shifted according to an operation of a driver. The gear shift indicator includes means for determining, for each of a first gear ratio and a second gear ratio of the transmission, whether fuel addition is performed to regenerate a purifier that purifies exhaust gas from an engine; means for calculating, for each of the first gear ratio and the second gear ratio, a first fuel consumption amount of the engine in a case where the fuel addition is not performed to regenerate the purifier; means for calculating, for each of the first gear ratio and the second gear ratio, a second fuel consumption amount of the engine in a case where the fuel addition is performed to regenerate the purifier; and indication means for comparing, when a current gear ratio of the transmission is the first gear ratio, one of the first fuel consumption amount and the second fuel consumption amount in the first gear ratio with one of the first fuel consumption amount and the second fuel consumption amount in the second gear ratio, and for indicating to the driver a shift from the first gear ratio to the second gear ratio.

A second aspect of the present invention provides a gear shift indication method for a transmission in which a gear is shifted according to an operation of a driver. The gear shift indication method includes step of determining, for each of a first gear ratio and a second gear ratio, whether fuel addition is performed to regenerate a purifier that purifies exhaust gas from an engine; step of calculating, for each of the first gear ratio and the second gear ratio, a first fuel consumption amount in the engine in a case where the fuel addition is not performed to regenerate the purifier; step of calculating, for each of the first gear ratio and the second gear ratio, a second fuel consumption amount of the engine in a case where the fuel addition is performed to regenerate the purifier; and step of indicating a shift to the second gear ratio to the driver by comparing, when a current gear of the transmission is the first gear ratio, one of the first fuel consumption amount and the second fuel consumption amount in the first gear ratio with one of the first fuel consumption amount and the second fuel consumption amount in the second gear ratio.

According to the above aspects of the invention, it is determined, for each gear ratio, whether fuel addition is performed to regenerate the purifier that purifies exhaust gas from the engine. The first fuel consumption amount of the engine in the case where fuel addition to regenerate the purifier is not performed and the second fuel consumption amount in the case where fuel addition is performed are calculated for each gear ratio. When the current gear ratio of the transmission is the first gear ratio, a shift to the second gear ratio is indicated to the driver by comparing one of the first fuel consumption amount and the second fuel consumption amount in the first gear ratio with one of the first fuel consumption amount and the second fuel consumption amount in the second gear ratio. For example, if one of the first fuel consumption amount and the second fuel consumption amount in the second gear ratio is smaller than one of the first fuel consumption amount and the second fuel consumption amount in the first gear ratio, the shift to the second gear ratio is indicated. Thus, a shift is indicated to a driver in consideration of the fuel consumption amount in the case where the purifier is regenerated without performing fuel addition. Accordingly, a shift to the gear in which the fuel consumption amount is smaller is indicated. As a result, a gear shift indicator or a gear shift indication method is provided that indicates a shift to the gear in which the fuel consumption amount is reduced.

When the fuel addition is performed to regenerate the purifier both in the first gear ratio and the second gear ratio, the indication means or the step of indicating the shift to the second gear ratio may compare the second fuel consumption amount in the first gear ratio with the second fuel consumption amount in the second gear ratio, and may indicate the shift to the second gear ratio when the second fuel consumption amount in the second gear ratio is smaller than the second fuel consumption amount in the first gear ratio.

According to the above, when the fuel addition to regenerate the purifier is performed both in the first gear ratio and the second gear ratio, the second fuel consumption amount in the first gear ratio is compared with the second fuel consumption amount in the second gear ratio. When the second fuel consumption amount in the second gear ratio is smaller than the second fuel consumption amount in the first fear ratio, the shift to the second gear ratio is indicated. Therefore, a shift to a gear in which the fuel consumption amount is smaller can be indicated.

When the fuel addition is performed to regenerate the purifier neither in the first gear ratio nor in the second gear ratio, the indication means or the step of indicating the shift to the second gear ratio may compare the first fuel consumption amount in the first gear ratio with the first fuel consumption amount in the second gear ratio, and may indicate the shift to the second gear ratio when the first fuel consumption amount in the second gear ratio is smaller than the first fuel consumption amount in the first gear ratio.

According to the above, when the fuel addition to regenerate the purifier is performed neither in the first gear ratio nor in the second gear ratio, the first fuel consumption amount in the first gear ratio is compared with the first fuel consumption amount in the second gear ratio. When the first fuel consumption amount in the second gear ratio is smaller than the first fuel consumption amount in the first fear ratio, the shift to the second gear ratio is indicated. Therefore, a shift to a gear in which the fuel consumption amount is smaller can be indicated.

When the fuel addition is not performed to regenerate the purifier in the first gear ratio and the fuel addition is performed to regenerate the purifier in the second gear ratio, the indication means or the step of indicating the shift to the second gear ratio may compare the first fuel consumption amount in the first gear ratio with the second fuel consumption amount in the second gear ratio, and may indicate the shift to the second gear ratio when the second fuel consumption amount in the second gear ratio is smaller than the first fuel consumption amount in the first gear ratio.

According to the above, the fuel addition is not performed to regenerate the purifier in the first gear ratio and the fuel addition is performed to regenerate the purifier in the second gear ratio, the first fuel consumption amount in the first gear ratio is compared with the second fuel consumption amount of the second gear ratio. When the second fuel consumption amount in the second gear ratio is smaller than the first fuel consumption amount in the first fear ratio, the shift to the second gear ratio is indicated. Therefore, a shift to a gear in which the fuel consumption amount is smaller can be indicated.

When the fuel addition is performed to regenerate the purifier in the first gear ratio and the fuel addition is not performed to regenerate the purifier in the second gear ratio, the indication means or the step of indicating the shift to the second gear ratio may compare the second fuel consumption amount in the first gear ratio with the first fuel consumption amount in the second gear ratio, and may indicate the shift to the second gear ratio when the first fuel consumption amount in the second gear ratio is smaller than the second fuel consumption amount in the first gear ratio.

According to the above, the fuel addition is performed to regenerate the purifier in the first gear ratio and the fuel addition is not performed to regenerate the purifier in the second gear ratio, the second fuel consumption amount in the first gear ratio is compared with the first fuel consumption amount in the second gear ratio. When the first fuel consumption amount in the second gear ratio is smaller than the second fuel consumption amount in the first gear ratio, the shift to the second gear ratio is indicated. Therefore, a shift to a gear in which the fuel consumption amount is smaller can be indicated.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic configuration diagram illustrating a power train for a vehicle on which a gear shift indicator according to an embodiment of the present invention is mounted;
FIG. 2 is a diagram illustrating an engine;
FIG 3 is a diagram illustrating a combination meter;
FIG. 4 is a functional block diagram of an ECU;
FIG 5 shows a shifting diagram; and
FIG. 6 is a flowchart illustrating a control structure of program performed by the ECU.

### DETAILED DESCRIPTION OF EMBODIMENTS

An embodiment of the present invention will be described with reference to drawings below. In the description below, the same components or portions are denoted by the same reference numerals. The names and functions thereof are the same. Therefore, detailed description thereof will not be repeated.

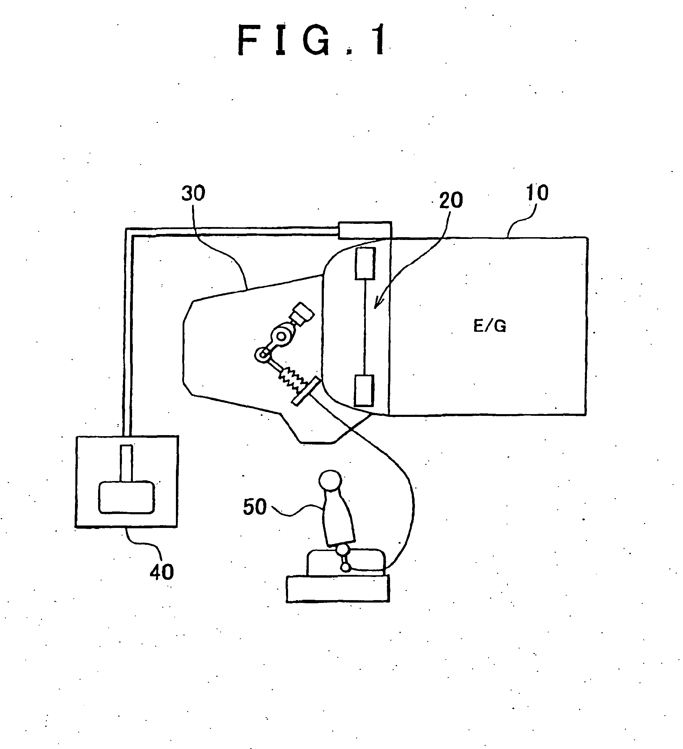

A power train for a vehicle on which a gear shift indicator according to an embodiment of the present invention is mounted will be described with reference to FIG 1. The power train includes an engine 10, a clutch 20 and a transmission 30.

The gear shift indicator according to this embodiment is realized by, for example, performing program stored in a ROM (Read Only Memory) 1004 of an ECU (Electronic Control Unit) 1000, which will be described later. The program performed by the ECU 1000 may be stored in a storage medium, such as a CD (Compact Disc) or a DVD (Digital Versatile Disc), and may be distributed to the market.

Torque of the engine 10 is transmitted to the transmission 30 via the clutch 20. The torque transmitted to the transmission 30 is further transmitted to driven wheels (not shown) via a drive shaft (not shown). The engine 10 will be described in detail later.

The clutch 20 is a dry single plate friction clutch. The clutch 20 is released when a driver depresses a clutch pedal 40. The transmission 30 is a manual transmission that shifts gears when the driver operates a shift lever 50. Gearshift of the transmission 30 may be performed by an actuator based on a shift by the driver.

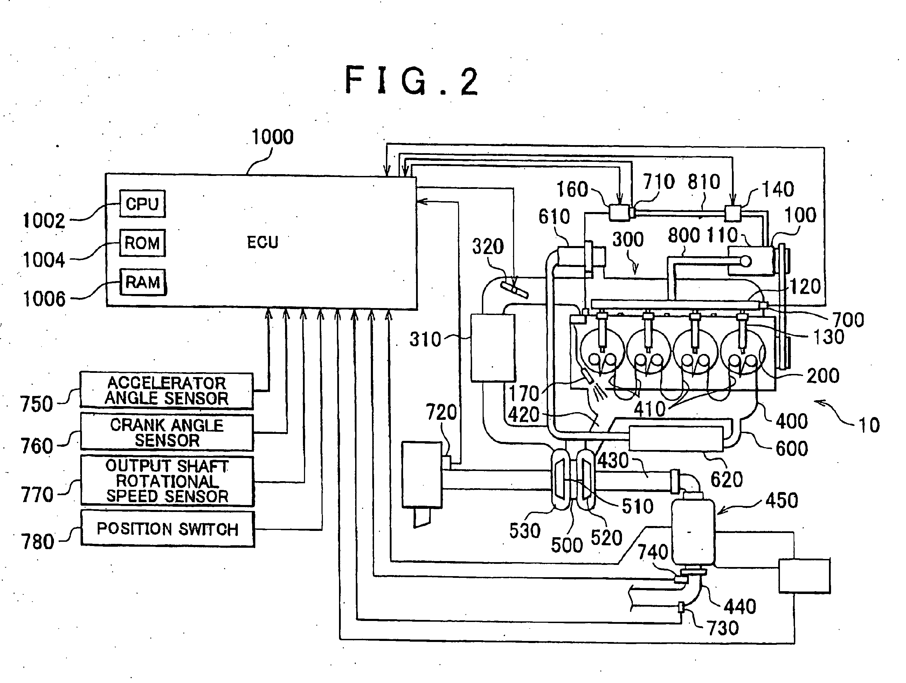

The engine 10 is further described with reference to FIG 2. In order to achieve clean exhaust emissions, the engine 10 continuously and simultaneously reduces PM and NOx by combining a high-pressure common rail fuel injector, a large capacity electronically controlled EGR (exhaust gas recirculation) cooler, and a DPNR catalyst.

In the description hereinafter, two catalysts are provided. Each catalyst includes a NSR (NOx Storage Reduction) catalyst that absorbs NOx, and a DPNR catalyst that removes PM, which is a particulate of carbon, or the like, and absorbs NOx. The NSR catalyst and the DPNR catalyst are disposed on an upstream side and on a downstream side, respectively. Note that this invention is not limited to the case in which two catalysts are provided. Further, the NSR catalyst is not limited to that constitutes a catalyst with the DPNR catalyst.

The engine 10 is an inline four-cylinder diesel engine that includes a fuel supply system 100, a combustion changer 200, an intake system 300, an exhaust system 400 and the like, as principal portions.

The fuel supply system 100 includes a supply pump 110, a common rail 120, a fuel injection valve 130, a cutoff valve 140, a control valve 160, a fuel addition nozzle 170, an engine fuel passage 800, an additional fuel passage 810, and the like.

The supply pump 110 pumps up fuel from a fuel tank, raises the pressure of the pumped fuel, and supplies the high-pressure fuel to the common rail 120 via the engine fuel passage 800. The common rail 120 has a function as an accumulator chamber that maintains (or accumulates) the high pressure fuel supplied from the supply pump 110 at (or to) a predetermined pressure. The accumulated fuel is distributed to each fuel injection valve 130. In the fuel injection valve 130, an electromagnetic solenoid is provided. The fuel injection valve 130 opens appropriately to inject and supplies fuel to the combustion chamber.

The supply pump 110 supplies a portion of the fuel pumped up from the fuel tank to the fuel addition nozzle (reducing agent injection nozzle) 170 via the additional fuel passage 810. The cutoff valve 140 and the control valve 160 are provided in series in the additional fuel passage 810 from the supply pump 110 to the fuel addition nozzle 170. The cutoff valve 140 cuts off the additional fuel passage 810 in the event of emergency, and stops supplying fuel. The control valve 160 controls the pressure of the fuel supplied to the fuel addition nozzle 170 (fuel pressure). The fuel addition nozzle 170 opens when the fuel pressure is higher than a predetermined pressure (e.g., 0.2Mpa). The fuel addition nozzle is a mechanical on-off valve that injects and supplies fuel into the exhaust system 400 (exhaust port 410). In other words, the control valve 160 controls the fuel pressure upstream of the fuel addition nozzle 170, and a desired amount of fuel is injected and supplied (or added) from the fuel addition nozzle 170 at an appropriate timing.

The intake system 300 forms an intake passage, which is a passage of intake air supplied to each combustion chamber 200. The exhaust system 400 is formed by connecting an exhaust port 410, an exhaust manifold 420, a catalyst upstream side passage 430 and a catalyst downstream side passage 440 in series from upstream side to downstream side. Thus, the exhaust system 400 forms an exhaust passage, which is a passage of exhaust gas discharged from each combustion chamber 200.

Further, the engine 10 is provided with a known booster device (turbocharger) 500. The turbocharger 500 is provided with a turbine wheel 520 and a turbine wheel 530 that are connected via a shaft 510. The turbine wheel (intake side turbine wheel) 530 is exposed to intake air in the intake system 300, and the turbine wheel (exhaust side turbine wheel) 520 is exposed to exhaust gas in the exhaust system 400. The turbocharger 500 as constructed above causes the intake side turbine wheel 520 to rotate by using the flow of exhaust gas (exhaust gas pressure) received by the exhaust side turbine wheel 520. Thus, the turbocharger 500 increases the intake pressure.

In the intake system 300, an intercooler 310 disposed downstream of the turbocharger 500 forcibly cools the intake air that has been heated by the pressure increase. The throttle valve 320 disposed further downstream of the intercooler 310 is an electronically controlled open/close valve whose opening degree is adjustable steplessly or continuously. The flow passage area of intake air is reduced under a predetermined condition, to regulate (or reduce) the supply amount of intake air.

Further, the engine 10 has an exhaust gas recirculation passage (EGR passage) 600, which is a bypass passage connecting between the upstream (intake system 300) and the downstream (exhaust system 400) of the combustion chamber 200. The EGR passage 600 has a function to return a portion of exhaust gas to the intake system 300, as appropriate. In the EGR passage 600, an EGR valve 610 and an EGR cooler 620 are provided. The EGR valve 610 is electronically controlled to open and close steplessly and is capable of regulating a flow volume of exhaust gas flowing through the EGR passage 600. The EGR cooler 620 cools recirculated exhaust gas that passes though the EGR passage 600.

In the exhaust system 400, a catalyst 450 formed of the NSR catalyst and the DPNR catalyst is provided downstream of the exhaust side turbine wheel 520 (between the catalyst upstream side passage 430 and the catalyst downstream side passage 440).

The NSR catalyst is a NOx storage reduction catalyst, in which, for example, almina (Al₂O₃) as a substrate carries or supports alkali metals, such as kalium (K), natrium (Na), litium (Li) or cesium (Ce), alkali earths, such as barium (Ba) or calcium (Ca), or rare earth elements, such as lantern (La) or yttrium (Y). The almina (Al₂O₃) also carries a rare metal, such as platinum (Pt).

The NSR catalyst absorbs NOx in a condition in which exhaust gas includes a great amount of oxygen. On the other hand, in a condition in which an oxygen concentration in exhaust gas is low and a great amount of the reducing components, such as unburned components of fuel (HC), exists in exhaust gas, the NSR catalyst reduces NOx to NO₂ or NO to release. NOx released as NO₂ or NO reacts quickly with HC or CO in exhaust gas and is further reduced to N₂. Note that, while reducing NO₂ or NO, HC or CO itself is oxidized to be H₂O or CO₂. In other words, if oxygen concentration or HC component in exhaust gas introduced into the NSR catalyst is controlled appropriately, HC, CO and NOx in exhaust gas is purified.

The DPNR catalyst is formed by combining a porous ceramic structure with NOx storage reduction catalyst. While exhaust gas from the engine 10 passes through gaps in the ceramics, the exhaust gas is oxidized or reduced by the catalyst, and is chemically-altered to harmless gas to discharge.

During a lean-burn (lean-burn with great amount of oxygen) operation, PM is temporarily trapped by the porous structured catalyst. At the same time, PM is oxidized and purified by active oxygen generated when NOx is stored and oxygen in the exhaust gas. NOx is once stored in the catalyst during the lean-burn operation, and then, is reduced and purified during an instantaneous or momentary rich-burn (during a combustion with rich air fuel ratio and small amount of oxygen) operation. Further, PM is oxidized and purified by active oxygen generated when the stored NOx is reduced during the rich burn operation.

Various sensors are attached to respective portions of the engine 10, and respectively output circumstantial conditions or signals with respect to the operating conditions of the engine 10.

For example, a rail pressure sensor 700 outputs a detection signal according to a pressure of fuel stored or accumulated in the common rail 120. A fuel pressure sensor 710 outputs a detection signal according to a pressure (fuel pressure) Pg of fuel introduced into the control valve 160 in the fuel flowing in the additional fuel passage 810. An airflow meter 720 outputs a detection signal according to a flow volume (intake air volume) Ga of intake air downstream of the throttle valve 320 in the intake system 300. An air fuel ratio (A/F) sensor 730 outputs a detection signal that continuously changes according to the oxygen concentration in exhaust gas downstream of the catalyst casing in the exhaust system 400. An exhaust temperature sensor 740 outputs a detection signal according to the temperature (exhaust temperature) Tex of exhaust gas downstream of the catalyst casing in the exhaust system 400.

An accelerator angle sensor 750 is attached to an accelerator pedal of the engine 10, and outputs a detection signal in accordance with an amount of depression of the accelerator pedal (an accelerator angle) Acc. A crank angle sensor 760 outputs a detection signal (pulse) every time an output shaft (crankshaft) rotates by a predetermined angle. An engine rotation speed NE is detected from the detection signal of the crank angle sensor 760.

An output shaft rotational speed sensor 770 outputs a detection signal (pulse) every time the output shaft of the transmission 30 rotates by a constant angle. Vehicle speeds are detected from the detection signals of the output shaft rotational speed sensor 770. A position switch 780 outputs a detection signal corresponding to a position of the shift lever 50, that is, a currently selected gear in the transmission 30. Each of the sensors 700-770 and the switch 780 is electrically connected to the ECU 1000.

The ECU 1000 includes a CPU (Central Processing Unit) 1002, a ROM 1004, a RAM (Random Access Memory) 1006, a timer, a counter, and the like, and is formed by connecting, via a bidirectional bus, the above components, an external input circuit including an A/D (Analog/Digital) converter, and an external output circuit.

The ECU 1000 formed as described above, receives detection signals of the above-described various sensors through the external input circuit, and performs various control with respect to operating states of the engine 10, such as reducing agent (fuel) addition control to determine an addition timing and an amount supplied with respect to the addition of the reducing agent (fuel functioning as reducing agent), in addition to basic control with respect to fuel injection or the like of the engine 10 based on the above-described signals.

Next, base principles of the fuel addition performed by the ECU 1000 will be described. Generally, in diesel engines, the oxygen concentration in air-fuel mixture to be burned in the combustion chamber is in a state of high concentration in most of operating regions.

Ordinarily, the oxygen concentration in the air-fuel mixture to be burned is directly reflected in the oxygen concentration in exhaust gas, while burned oxygen is subtracted therefrom. When the oxygen concentration (air-fuel ratio) in the air-fuel mixture is high, the oxygen concentration (air-fuel ratio) in the exhaust gas is basically high as well. Meanwhile, as described above, the NOx storage reduction catalyst absorbs NOx when the oxygen concentration in exhaust gas is high, and reduces NOx to NO₂ or NO and releases them when the oxygen concentration in exhaust gas is low. Thus, as long as the oxygen in exhaust gas remains in a high concentration state, NOx is absorbed. Note that, however, if the catalyst has a limit in the amount of NOx to be absorbed, and is in the state where the catalyst has absorbed the limit amount of NOx, NOx in exhaust gas is not absorbed by the catalyst and passes through the catalyst casing.

Therefore, in the internal combustion engine, such as the engine 10 that is provided with the fuel addition nozzle 170, fuel is added in the exhaust system 400 upstream of the catalyst 450 through the fuel addition nozzle 170 at an appropriate time (hereinafter, "exhaust addition"), thereby temporarily reducing the oxygen concentration in the exhaust gas and increasing the amount of reducing components (such as HC). Then, the catalyst 450 reduces the NOx absorbed up to then to NO₂ or NO and releases them. Thus, the catalyst 450 recovers (regenerates) the NOx absorption capacity thereof. The released NO₂ or NO reacts with HC or CO to be quickly reduced to N₂, as described above.

At this time, because the catalyst 450 releases NOx absorbed thereby and reduces and purifies it, the efficiency of the reduction and purification is determined based on the amount of reducing components (fuel concentration) and the oxygen concentration (air-fuel ratio) in the exhaust gas flowing into the catalyst casing.

The PM accumulated in the DPNR is burned by the exhaust gas whose temperature is increased for a regeneration process, and the burned PM further increases the temperature of the exhaust gas, thereby burning more PM. Thus, the PM trapping capability of DPNR is regenerated. At this time, additional fuel of the amount determined based on the operating state of the engine and the value measured by the temperature sensors disposed before and after the DPNR is added. More specifically, the additional fuel amount for PM regeneration is determined in consideration of combustion state or fuel injection state in the engine.

With respect to the amount of trapped PM, the ECU 1000 detects the state quantities from the various sensors, and performs an operation for estimating the amount of trapped PM. Incidentally, because the amount of fuel injection from the fuel addition nozzle 170, including the fuel addition for the PM regeneration, does not contribute to the engine output, it is preferable that the fuel injection amount from the fuel addition nozzle 170 is as less as possible to improve the fuel economy. In other words, it is preferable that the PM regeneration is performed efficiently by effectively using the heat of PM burning and is completed in a time period as short as possible.

As described above, with respect to the fuel addition, the fuel addition (fuel addition control) to the exhaust system is performed such that, in the engine 10, an appropriate amount of reducing components and air-fuel ratio in the exhaust gas, and an appropriate temperature of the exhaust gas are stably obtained.

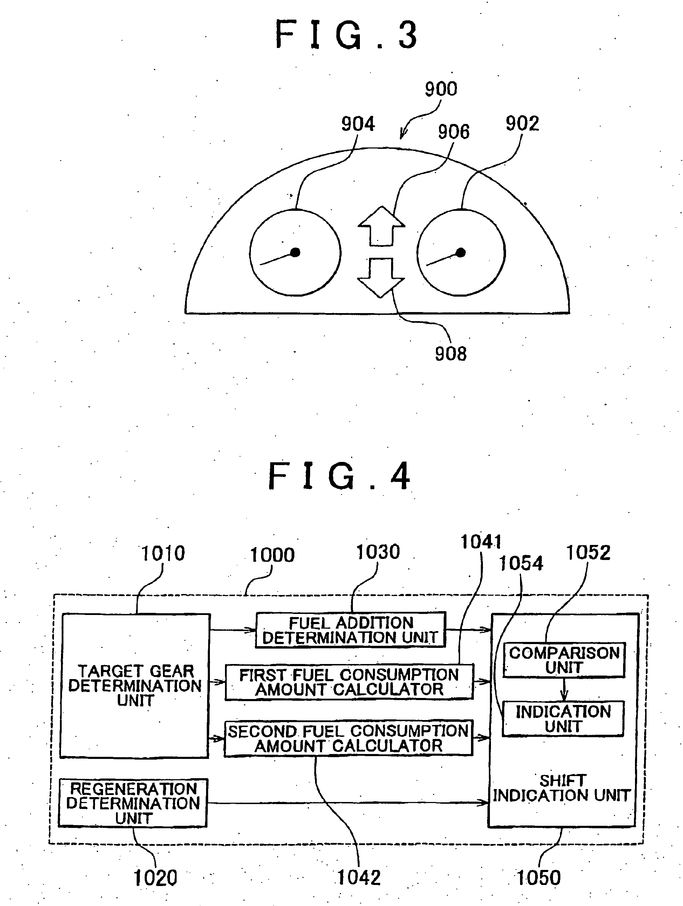

The combination meter 900 of the vehicle on which the gear shift indicator according to the embodiment of the present invention will be described with reference to FIG 3. The combination meter 900 includes an up-shift indicator lamp 906 and a downshift indicator lamp 908 in addition to a speedometer 902 and a tachometer 904.

The up-shift indicator lamp 906 turns on or flashes, for example, to indicate an up-shift operation to the driver. On the other hand, the downshift indicator lamp 908 turns on or flashes, for example, to indicate a downshift operation to the driver. Incidentally, an up-shift operation or a downshift operation may be indicated with sounds.

The functions of ECU 1000 will be described with reference to FIG. 4. The functions of ECU 1000 described below may be realized by hardware or software.

The ECU 1000 includes a target gear determination unit 1010, a regeneration determination unit 1020, a fuel addition determination unit 1030, a first fuel consumption amount calculator 1041, a second fuel consumption amount calculator 1042 and a shift indication unit 1050.

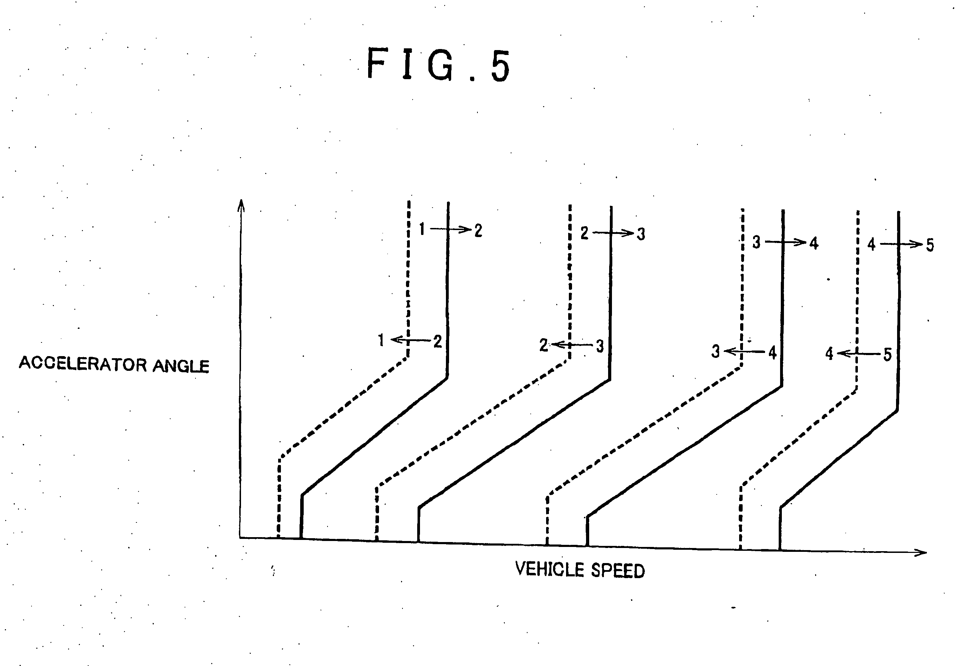

The target gear determination unit 1010 determines a target gear, which is a gear to be indicated to the driver, based on, for example, a shifting diagram shown in FIG. 5. The shifting diagram in this embodiment is defined by accelerator angles and vehicle speeds as parameters. In FIG 5, solid lines are up-shift lines, and broken lines are downshift lines. The parameters of the shifting diagram are not limited thereto.

Return to FIG. 4, the regeneration determination unit 1020 determines whether regeneration of the catalyst 450 is necessary. Whether the regeneration is necessary is determined by, for example, determining whether the value obtained by summing loads (intake air amounts) of the engine 10 after the previous regeneration is performed exceeds a threshold value. Incidentally, the method to determine whether regeneration is necessary is not limited thereto. Other well-known common techniques may be utilized, instead.

The fuel addition determination unit 1030 determines, in each gear of the transmission 30, whether the fuel addition from the fuel addition nozzle 170 is necessary (or is performed) to regenerate the catalyst 450.

For example, if the temperature of the exhaust gas detected by the exhaust temperature sensor 740 is smaller than a threshold value, it is determined that fuel addition is necessary in the current gear. On the other hand, if the temperature of the exhaust gas detected by the exhaust temperature sensor 740 is larger than the threshold value, it is determined that fuel addition is not necessary in the current gear. If the temperature of the exhaust gas in the target gear, which is estimated from a map having a temperature of exhaust gas detected by the exhaust temperature sensor 740, a current gear and a target gear as parameters, is smaller than the threshold value, it is determined that fuel addition is necessary in the target gear. If the estimated temperature of the exhaust gas is larger than the threshold value, it is determined that fuel addition is not necessary in the target gear. Note that the method to determine whether fuel addition is necessary is not limited thereto.

The first fuel consumption amount calculator 1041 calculates a first fuel consumption amount for each gear of the transmission 30. The first fuel consumption amount is a fuel consumption amount (fuel consumption rate) of the engine 10 when the fuel addition to regenerate the catalyst 450 is not necessary (is not performed).

The second fuel consumption amount calculator 1042 calculates a second fuel consumption amount for each gear of the transmission 30. The second fuel consumption amount is a fuel consumption amount of the engine 10 when the fuel addition to regenerate the catalyst 450 is necessary (is performed).

The fuel consumption amount is calculated according to, for example, a map using output torque of engine 10 and an engine rotational speed NE as parameters. The map is defined for each gear. The output torque of engine 10 is calculated from, for example, an accelerator angle Acc, an intake air amount Ga, an engine rotational speed NE, or the like. Note that the methods for calculating the fuel consumption amount and the output torque are not limited thereto, but a well-known common technology may be utilized.

The first fuel consumption amount and the second fuel consumption amount in the target gear may be calculated using, for example, an engine rotational speed NE estimated by multiplying the output shaft rotational speed of the transmission 30 by the gear ratio of the target gear, instead of the engine rotational speed NE detected by use of the crank angle sensor 760.

The shift indication unit 1050 includes a comparison unit 1054 and an indication unit 1054. The comparison unit 1052 compares the fuel consumption amount in the current gear, which is detected using the position switch 780, and the fuel consumption amount in the target gear.

If fuel addition to regenerate the catalyst 450 is necessary in both of the current gear and the target gear, the second fuel consumption amount in the current gear is compared with the second fuel consumption amount in the target gear.

If fuel addition to regenerate the catalyst 450 is necessary neither in the current gear nor in the target gear, the first fuel consumption amount in the current gear is compared with the first fuel consumption amount in the target gear.

If fuel addition to regenerate the catalyst 450 is not necessary in the current gear and fuel addition is necessary in the target gear, the first fuel consumption amount in the current gear is compared with the second fuel consumption amount in the target gear.

If fuel addition to regenerate the catalyst 450 is necessary in the current gear and fuel addition is not necessary in the target gear, the second fuel consumption amount in the current gear is compared with the first fuel consumption amount in the target gear.

If the regeneration of the catalyst is not necessary, the first fuel consumption amount in the current gear is compared with the first fuel consumption amount in the target gear, in the same manner as the case in which the fuel addition is necessary neither in the current gear nor in the target gear.

The indication unit 1054 indicates to the driver a shift to the target gear using the up-shift indicator lamp 906 or the downshift indicator lamp 908, when the fuel consumption amount in the target gear is smaller than the fuel consumption amount in the current gear of the transmission 30.

If the target gear is a gear with a speed higher than (or a gear with a gear ratio lower than) that of the current gear, an up-shift operation to the target gear is indicated using the up-shift indicator lamp 906. If the target gear is a gear with a speed lower than (or a gear with a gear ratio higher than) that of the current gear, a downshift operation to the target gear is indicated by the downshift indicator lamp 908.

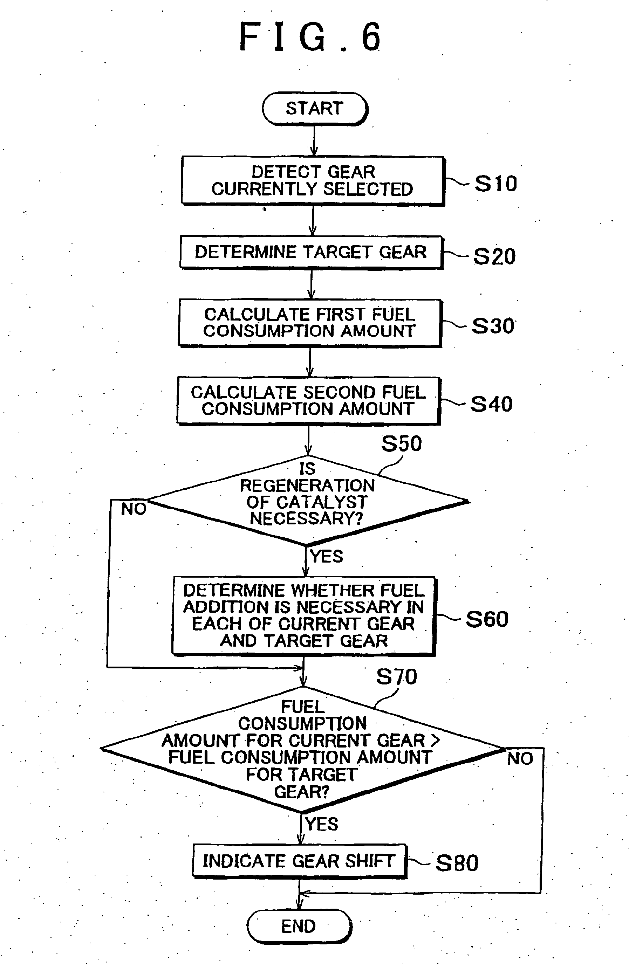

A control structure of the program performed by the ECU 1000, which is a shift indication device according to the embodiment with reference to FIG 6.

In step 10 (hereinafter, "step" is denoted by "S"), the ECU 1000 detects the position of the shift lever 50, i.e., the current selected gear in the transmission 30, based on the signal transmitted from the position switch 780. In S20, the ECU 1000 determines the target gear in accordance with a shifting diagram.

In S30, the ECU 1000 calculates a first fuel consumption amount, which is a fuel consumption amount of the engine 10 when fuel addition to regenerate the catalyst 450 is not necessary, for each of the current gear and the target gear.

In S40, the ECU 1000 calculates a second fuel consumption amount, which is a fuel consumption amount of the engine 10 when fuel addition to regenerate the catalyst 450 is necessary, for each of the current gear and the target gear.

In S50, the ECU 1000 determines whether the regeneration of the catalyst 450 is necessary. If it is determined that the regeneration of the catalyst 450 is necessary (YES in S50), the process proceeds to S60. If not (NO in S50), the process proceeds to S70.

In S60, the ECU 1000 determines whether fuel addition from the fuel addition nozzle 170 to regenerate the catalyst 450 is necessary in each of the current gear and the target gear.

In S70, the ECU 1000 determines whether the fuel consumption amount in the target gear is smaller than the fuel consumption amount in the current gear.

If fuel addition is necessary both in the current gear and the target gear, it is determined whether the second fuel consumption amount in the target gear is smaller than the second fuel consumption amount in the current gear.

If fuel addition is necessary neither in the current gear nor in the target gear, it is determined whether the first fuel consumption amount in the target gear is smaller than the first fuel consumption amount in the current gear.

If fuel addition is not necessary in the current gear and the fuel addition is necessary in the target gear, it is determined whether the second fuel consumption amount in the target gear is smaller than the first fuel consumption amount in the current gear.

If fuel addition is necessary in the current gear and the fuel addition is not necessary in the target gear, it is determined whether the first fuel consumption amount in the target gear is smaller than the second fuel consumption amount in the current gear.

If the regeneration of the catalyst 450 is not necessary, it is determined whether the first fuel consumption amount in the target gear is smaller than the first fuel consumption amount in the current gear, as in the case in which fuel addition is necessary neither in the current gear nor in the target gear.

If it is determined that the fuel consumption amount in the target gear is smaller than the fuel consumption amount in the current gear, (YES in S70), the process proceeds to S80. If not (NO in S70), this process terminates. In S80, the ECU 1000 indicates to the driver a shift to the target gear.

Operations of the ECU 1000, which corresponds to the gear shift indicator according to the embodiment, based on the construction and the flowchart described above will be described hereinafter.

When the vehicle is running, the position of the shift lever 50, i.e., the gear currently selected in the transmission 30 is detected based on the signal transmitted from the position switch 780 (S10). The target gear is also determined in accordance with the shifting diagram (S20).

Further, the first fuel consumption amount of the engine 10 in the case where fuel addition to regenerate the catalyst 450 is not necessary is calculated for each of the current gear and the target gear (S30). Similarly, the second fuel consumption amount of the engine 10 in the case where fuel addition to regenerate the catalyst 450 is necessary' is calculated for each of the current gear and the target gear (S40).

If the regeneration of the catalyst 450 is necessary (YES in S50), it is determined, for each of the current gear and the target gear, whether the fuel addition from the fuel addition nozzle 170 to regenerate the catalyst 450 is necessary (S60).

Then, it is determined whether the fuel consumption of the target gear is smaller than the fuel consumption amount in the current gear (S70). If the fuel consumption amount in the target gear is smaller than the fuel consumption amount in the current gear (YES in S70), a shift to the target gear is indicated (S80).

In the case where the fuel addition is necessary both in the current gear and in the target gear, if the second fuel consumption amount in the target gear is smaller than the second fuel consumption amount in the current gear, a shift to the target gear is indicated.

In the case where the fuel addition is necessary neither in the current gear nor in the target gear, if the first fuel consumption amount in the target gear is smaller than the fist fuel consumption amount in the current gear, a shift to the target gear is indicated.

In the case where the fuel addition is not necessary in the current gear and the fuel addition is necessary in the target gear, if the second fuel consumption amount in the target gear is smaller than the first fuel consumption amount in the current gear, a shift to the target gear is indicated.

In the case where the fuel addition is necessary in the current gear and the fuel addition is not necessary in the target gear, if the first fuel consumption amount in the target gear is smaller than the second fuel consumption amount in the current gear, a shift to the target gear is indicated.

In the case the regeneration of the catalyst 450 is not necessary (NO in S50), if the first fuel consumption amount in the target gear is smaller than the first fuel consumption amount in the current gear, a shift to the target gear is indicated.

As described above, according to the ECU, which is the gear shift indicator of the embodiment, the first fuel consumption amount and the second fuel consumption amount are calculated for each of the current gear and the target gear. The first fuel consumption amount is a fuel consumption amount of the engine when the fuel addition to regenerate the catalyst is not necessary. The second fuel consumption is a fuel consumption amount of the engine when the fuel addition is necessary. One of the first fuel consumption amount and the second fuel consumption amount in the current gear is compared with one of the first fuel consumption amount and the second fuel consumption amount in the target gear, and a shift to the target gear is indicated. By doing this, a shift is indicated to the driver in consideration of the fuel consumption amount when the catalyst is regenerated without fuel addition. Accordingly, a shift to the gear in which the fuel consumption amount is smaller is indicated to the driver.

While some embodiments of the invention have been illustrated above, it is to be understood that the invention is not limited to details of the illustrated embodiments, but may be embodied with various changes, modifications or improvements, which may occur to those skilled in the art, without departing from the scope of the invention.

## Claims

1. A gear shift indicator (1000) for a transmission (30) in which a gear is shifted according to an operation of a driver, **characterized by** comprising:
means (1030) for determining, for each of a first gear ratio and a second gear ratio of the transmission, whether fuel addition is performed to regenerate a purifier that purifies exhaust gas from an engine;
means (1041) for calculating, for each of the first gear ratio and the second gear ratio, a first fuel consumption amount of the engine in a case where the fuel addition is not performed to regenerate the purifier;
means (1042) for calculating, for each of the first gear ratio and the second gear ratio, a second fuel consumption amount of the engine in a case where the fuel addition is performed to regenerate the purifier; and
indication means (1050) for comparing, when a current gear ratio of the transmission is the first gear ratio, one of the first fuel consumption amount and the second fuel consumption amount in the first gear ratio with one of the first fuel consumption amount and the second fuel consumption amount in the second gear ratio, and for indicating to the driver a shift from the first gear ratio to the second gear ratio.

2. The gear shift indicator according to claim 1, wherein when the fuel addition is performed to regenerate the purifier both in the first gear ratio and the second gear ratio, the indication means compares the second fuel consumption amount in the first gear ratio with the second fuel consumption amount in the second gear ratio, and indicates the shift to the second gear ratio when the second fuel consumption amount in the second gear ratio is smaller than the second fuel consumption amount in the first gear ratio.

3. The gear shift indicator according to claim 1, wherein when the fuel addition is performed to regenerate the purifier neither in the first gear ratio nor in the second gear ratio, the indication means compares the first fuel consumption amount in the first gear ratio with the first fuel consumption amount in the second gear ratio, and indicates the shift to the second gear ratio when the first fuel consumption amount in the second gear ratio is smaller than the first fuel consumption amount in the first gear ratio.

4. The gear shift indicator according to claim 1, wherein when the fuel addition is not performed to regenerate the purifier in the first gear ratio and the fuel addition is performed to regenerate the purifier in the second gear ratio, the indication means compares the first fuel consumption amount in the first gear ratio with the second fuel consumption amount in the second gear ratio, and indicates the shift to the second gear ratio when the second fuel consumption amount in the second gear ratio is smaller than the first fuel consumption amount in the first gear ratio.

5. The gear shift indicator according to claim 1, wherein when the fuel addition is performed to regenerate the purifier in the first gear ratio and the fuel addition is not performed to regenerate the purifier in the second gear ratio, the indication means compares the second fuel consumption amount in the first gear ratio with the first fuel consumption amount in the second gear ratio, and indicates the shift to the second gear ratio when the first fuel consumption amount in the second gear ratio is smaller than the second fuel consumption amount in the first gear ratio.

6. The gear shift indicator according to any one of claims 1 to 5, further comprising:
a storage that stores a shifting diagram defined by accelerator angles and vehicles speeds as parameters; and
means for determining a target gear ratio as the second gear ratio based on the shifting diagram.

7. The gear shift indicator according to any one of claims 1 to 5, further comprising means for determining whether regeneration of the purifier is performed, wherein the indication means compares the first consumption amount for the first gear ratio and the first consumption amount for the second gear ratio, when it is determined that the regeneration of the purifier is not performed.

8. The gear shift indicator according to any one of claims 1 to 5, wherein it is determined whether the fuel addition is performed in the first gear ratio in accordance with a current temperature of the exhaust gas, and it is determined whether the fuel addition is performed in the second gear ratio in accordance with a temperature of the exhaust gas in the second gear ratio, estimated based on a map defined by the temperature of exhaust gas, the current gear ratio and the second gear ratio as parameters, is smaller than the threshold value.

9. The gear shift indicator according to any one of claims 1 to 5, wherein the first fuel consumption amount in each of the first gear ratio and the second gear ratio is calculated in accordance with maps respectively prepared for the first gear ratio and the second gear ratio, and defined by output torque of the engine and an engine rotational speed as parameters.

10. The gear shift indicator according to any one of claims 1 to 5, wherein the indication means indicates the shift to the second gear ratio using an up-shift indicator lamp and a downshift indicator lamp.

11. A gear shift indication method for a transmission in which a gear is shifted according to an operation of a driver, **characterized by** comprising:
step of determining, for each of a first gear ratio and a second gear ratio, whether fuel addition is performed to regenerate a purifier that purifies exhaust gas from an engine;
step of calculating, for each of the first gear ratio and the second gear ratio, a first fuel consumption amount of the engine in a case where the fuel addition is not performed to regenerate the purifier;
step of calculating, for each of the first gear ratio and the second gear ratio, a second fuel consumption amount of the engine in a case where the fuel addition is performed to regenerate the purifier; and
step of indicating a shift to the second gear ratio to the driver by comparing, when a current gear of the transmission is the first gear ratio, one of the first fuel consumption amount and the second fuel consumption amount in the first gear ratio with one of the first fuel consumption amount and the second fuel consumption amount in the second gear ratio.

12. The gear shift indication method according to claim 11, wherein when the fuel addition is performed to regenerate the purifier both in the first gear ratio and the second gear ratio, the step of indicating the shift to the second gear ratio compares the second fuel consumption amount in the first gear ratio with the second fuel consumption amount in the second gear ratio, and indicates the shift to the second gear ratio when the second fuel consumption amount in the second gear ratio is smaller than the second fuel consumption amount in the first gear ratio.

13. The gear shift indication method according to claim 11, wherein when the fuel addition is performed to regenerate the purifier neither in the first gear ratio nor the second gear ratio, the step of indicating the shift to the second gear ratio compares the first fuel consumption amount in the first gear ratio with the first fuel consumption amount in the second gear ratio, and indicates the shift to the second gear ratio when the first fuel consumption amount in the second gear ratio is smaller than the first fuel consumption amount in the first gear ratio.

14. The gear shift indication method according to claim 11, wherein when the fuel addition is not performed to regenerate the purifier in the first gear ratio and the fuel addition is performed to regenerate the purifier in the second gear ratio, the step of indicating the shift to the second gear ratio compares the first fuel consumption amount in the first gear ratio with the second fuel consumption amount in the second gear ratio, and indicates the shift to the second gear ratio is indicated when the second fuel consumption amount in the second gear ratio is smaller than the first fuel consumption amount in the first gear ratio.

15. The gear shift indication method according to claim 11, wherein when the fuel addition is performed to regenerate the purifier in the first gear ratio and the fuel addition is not performed to regenerate the purifier in the second gear ratio, the step of indicating the shift to the second gear ratio compares the second fuel consumption amount in the first gear ratio with the first fuel consumption amount in the second gear ratio, and indicates the shift to the second gear ratio when the first fuel consumption amount in the second gear ratio is smaller than the second fuel consumption amount in the first gear ratio.

## Patentansprüche

1. Gangschaltanzeiger (1000) für ein Getriebe (30), in dem ein Gang gemäß einer Betätigung eines Fahrers gewechselt wird, **gekennzeichnet durch**:
eine Einrichtung (1030), die für jedes von einem ersten Übersetzungsverhältnis und einem zweiten Übersetzungsverhältnis des Getriebes bestimmt, ob eine Kraftstoffzugabe zum Regenerieren eines Reinigers durchgeführt wird, der Abgas von einem Motor reinigt;
eine Einrichtung (1041), die für jedes von dem ersten Übersetzungsverhältnis und dem zweiten Übersetzungsverhältnis eine erste Kraftstoffverbrauchsmenge des Motors in einem Fall berechnet, in dem die Kraftstoffzugabe zum Regenerieren des Reinigers nicht durchgeführt wird;
eine Einrichtung (1042), die für jedes von dem ersten Übersetzungsverhältnis und dem zweiten Übersetzungsverhältnis eine zweite Kraftstoffverbrauchsmenge des Motors in einem Fall berechnet, in dem die Kraftstoffzugabe zum Regenerieren des Reinigers durchgeführt wird; und
eine Anzeigeeinrichtung (1050), die, wenn ein gegenwärtiges Übersetzungsverhältnis des Getriebes das erste Übersetzungsverhältnis ist, eine von der ersten Kraftstoffverbrauchsmenge und der zweiten Kraftstoffverbrauchsmenge bei dem ersten Übersetzungsverhältnis mit einer von der ersten Kraftstoffverbrauchsmenge und der zweiten Kraftstoffverbrauchsmenge bei dem zweiten Übersetzungsverhältnis vergleicht und dem Fahrer einen Wechsel von dem ersten Übersetzungsverhältnis zu dem zweiten Übersetzungsverhältnis anzeigt.

2. Gangschaltanzeiger nach Anspruch 1, wobei, wenn die Kraftstoffzugabe zum Regenerieren des Reinigers jeweils bei dem ersten Übersetzungsverhältnis und bei dem zweiten Übersetzungsverhältnis durchgeführt wird, die Anzeigeeinrichtung die zweite Kraftstoffverbrauchsmenge bei dem ersten Übersetzungsverhältnis mit der zweiten Kraftstoffverbrauchsmenge bei dem zweiten Übersetzungsverhältnis vergleicht und den Wechsel zu dem zweiten Übersetzungsverhältnis anzeigt, wenn die zweite Kraftstoffverbrauchsmenge bei dem zweiten Übersetzungsverhältnis kleiner ist als die zweite Kraftstoffverbrauchsmenge bei dem ersten Übersetzungsverhältnis.

3. Gangwechselanzeiger nach Anspruch 1, wobei, wenn die Kraftstoffzugabe zum Regenerieren des Reinigers weder bei dem ersten Übersetzungsverhältnis noch bei dem zweiten Übersetzungsverhältnis durchgeführt wird, die Anzeigeeinrichtung die erste Kraftstoffverbrauchsmenge bei dem ersten Übersetzungsverhältnis mit der ersten Kraftstoffverbrauchsmenge bei dem zweiten Übersetzungsverhältnis vergleicht und den Wechsel zu dem zweiten Übersetzungsverhältnis anzeigt, wenn die erste Kraftstoffverbrauchsmenge bei dem zweiten Übersetzungsverhältnis kleiner ist als die erste Kraftstoffverbrauchsmenge bei dem ersten Übersetzungsverhältnis.

4. Gangwechselanzeiger nach Anspruch 1, wobei, wenn die Kraftstoffzugabe zum Regenerieren des Reinigers bei dem ersten Übersetzungsverhältnis nicht durchgeführt wird und die Kraftstoffzugabe zum Regenerieren des Reinigers bei dem zweiten Übersetzungsverhältnis durchgeführt wird, die Anzeigeeinrichtung die erste Kraftstoffverbrauchsmenge bei dem ersten Übersetzungsverhältnis mit der zweiten Kraftstoffverbrauchsmenge bei dem zweiten Übersetzungsverhältnis vergleicht und den Wechsel zu dem zweiten Übersetzungsverhältnis anzeigt, wenn die zweite Kraftstoffverbrauchsmenge bei dem zweiten Übersetzungsverhältnis kleiner ist als die erste Kraftstoffverbrauchsmenge bei dem ersten Übersetzungsverhältnis.

5. Gangwechselanzeiger nach Anspruch 1, wobei, wenn die Kraftstoffzugabe zum Regenerieren des Reinigers in dem ersten Übersetzungsverhältnis durchgeführt wird und die Kraftstoffzugabe zum Regenerieren des Reinigers in dem zweiten Übersetzungsverhältnis nicht durchgeführt wird, die Anzeigeeinrichtung die zweite Kraftstoffverbrauchsmenge bei dem ersten Übersetzungsverhältnis mit der ersten Kraftstoffverbrauchsmenge bei dem zweiten Übersetzungsverhältnis vergleicht und den Wechsel zu dem zweiten Übersetzungsverhältnis anzeigt, wenn die erste Kraftstoffverbrauchsmenge bei dem zweiten Übersetzungsverhältnis kleiner ist als die zweite Kraftstoffverbrauchsmenge bei dem ersten Übersetzungsverhältnis.

6. Gangwechselanzeiger nach einem der Ansprüche 1 bis 5, ferner mit:
einem Speicher, der ein Schaltdiagramm speichert, das durch Beschleunigerwinkel und Fahrzeuggeschwindigkeiten als Parameter bestimmt ist; und
einer Einrichtung zum Bestimmen eines Sollübersetzungsverhältnisses als das zweite Übersetzungsverhältnis auf der Grundlage des Schaltdiagramms.

7. Gangwechselanzeiger nach einem der Ansprüche 1 bis 5, ferner mit einer Einrichtung zum Bestimmen, ob eine Regenerierung des Reinigers durchgeführt wird, wobei die Anzeigeeinrichtung die erste Verbrauchsmenge für das erste Übersetzungsverhältnis mit der ersten Verbrauchsmenge für das zweite Übersetzungsverhältnis vergleicht, wenn bestimmt worden ist, dass die Regeneration des Reinigers nicht durchgeführt wird.

8. Gangwechselanzeiger nach einem der Ansprüche 1 bis 5, wobei gemäß einer gegenwärtigen Temperatur des Abgases bestimmt wird, ob die Kraftstoffzugabe in dem ersten Übersetzungsverhältnis durchgeführt wird, und bestimmt wird, ob gemäß einer Temperatur des Abgases bei dem zweiten Übersetzungsverhältnis die Kraftstoffzugabe bei dem zweiten Übersetzungsverhältnis durchgeführt wird, was aufgrund eines von der Temperatur des Abgases, dem gegenwärtigen Übersetzungsverhältnis und dem zweiten Übersetzungsverhältnis als Parameter bestimmten Kennfelds abgeschätzt wird und kleiner als der Schwellwert ist.

9. Gangwechselanzeiger nach einem der Ansprüche 1 bis 5, wobei die erste Kraftstoffverbrauchsmenge bei jedem von dem ersten Übersetzungsverhältnis und dem zweiten Übersetzungsverhältnis gemäß jeweiligen für das erste Übersetzungsverhältnis und das zweite Übersetzungsverhältnis vorbereiteten Kennfeldern berechnet wird und von einem Ausgangsdrehmoment des Motor und einer Motordrehzahl als Parameter bestimmt ist.

10. Gangwechselanzeiger nach einem der Ansprüche 1 bis 5, wobei die Anzeigeeinrichtung den Wechsel zu dem zweiten Übersetzungsverhältnis durch die Verwendung einer Hochschaltanzeigelampe und einer Runterschaltanzeigelampe anzeigt.

11. Gangwechselanzeigeverfahren für ein Getriebe, in dem ein Gang gemäß einer Betätigung eines Fahrers gewechselt wird, **gekennzeichnet durch**:
einen Schritt, der für jedes von einem ersten Übersetzungsverhältnis und einem zweiten Übersetzungsverhältnis bestimmt, ob eine Kraftstoffzugabe zum Regenerieren eines Reinigers durchgeführt wird, der Abgas von dem Motor reinigt;
einen Schritt, der für jedes von dem ersten Übersetzungsverhältnis und dem zweiten Übersetzungsverhältnis eine erste Kraftstoffverbrauchsmenge des Motors in einem Fall berechnet, in dem die Kraftstoffzugabe zum Regenerieren des Reinigers nicht durchgeführt wird;
einen Schritt, der für jedes von dem ersten Übersetzungsverhältnis und dem zweiten Übersetzungsverhältnis eine zweite Kraftstoffverbrauchsmenge des Motors in einem Fall berechnet, in dem die Kraftstoffzugabe zum Regenerieren des Reinigers durchgeführt wird; und
einen Schritt, in dem dem Fahrer ein Wechsel zu dem zweiten Übersetzungsverhältnis angezeigt wird, indem, wenn ein gegenwärtiger Gang des Getriebes das erste Übersetzungsverhältnis ist, eine von der ersten Kraftstoffverbrauchsmenge und der zweiten Kraftstoffverbrauchsmenge bei dem ersten Übersetzungsverhältnis mit einer von der ersten Kraftstoffverbrauchsmenge und der zweiten Kraftstoffverbrauchsmenge bei dem zweiten Übersetzungsverhältnis verglichen wird.

12. Gangwechselanzeigeverfahren nach Anspruch 11, wobei, wenn die Kraftstoffzugabe zum Regenerieren des Reinigers sowohl bei dem ersten Übersetzungsverhältnis als auch dem zweiten Übersetzungsverhältnis durchgeführt wird, der Schritt, in dem der Wechsel zu dem zweiten Übersetzungsverhältnis angezeigt wird, die zweite Kraftstoffverbrauchsmenge bei dem ersten Übersetzungsverhältnis mit der zweiten Kraftstoffverbrauchsmenge bei dem zweiten Übersetzungsverhältnis vergleicht und dem Fahrer den Wechsel zu dem zweiten Übersetzungsverhältnis anzeigt, wenn die zweite Kraftstoffverbrauchsmenge bei dem zweiten Übersetzungsverhältnis kleiner ist als die zweite Kraftstoffverbrauchsmenge bei dem ersten Übersetzungsverhältnis.

13. Gangwechselanzeigeverfahren nach Anspruch 11, wobei, wenn die Kraftstoffzugabe zum Regenerieren des Reinigers weder bei dem ersten Übersetzungsverhältnis noch bei dem zweiten Übersetzungsverhältnis durchgeführt wird, der Schritt, in dem der Wechsel zu dem zweiten Übersetzungsverhältnis anzeigt wird, die erste Kraftstoffverbrauchsmenge bei dem ersten Übersetzungsverhältnis mit der ersten Kraftstoffverbrauchsmenge bei dem zweiten Übersetzungsverhältnis vergleicht und den Wechsel zu dem zweiten Übersetzungsverhältnis anzeigt, wenn die erste Kraftstoffverbrauchsmenge bei dem zweiten Übersetzungsverhältnis kleiner ist als die erste Kraftstoffverbrauchsmenge bei dem ersten Übersetzungsverhältnis.

14. Gangwechselanzeigeverfahren nach Anspruch 11, wobei, wenn die Kraftstoffzugabe zum Regenerieren des Reinigers bei dem ersten Übersetzungsverhältnis nicht durchgeführt wird und die Kraftstoffzugabe zum Regenerieren des Reinigers bei dem zweiten Übersetzungsverhältnis durchgeführt wird, der Schritt, in dem der Wechsel zu dem zweiten Übersetzungsverhältnis angezeigt wird, die erste Kraftstoffverbrauchsmenge bei dem ersten Übersetzungsverhältnis mit der zweiten Kraftstoffverbrauchsmenge bei dem zweiten Übersetzungsverhältnis vergleicht und den Wechsel zu dem zweiten Übersetzungsverhältnis anzeigt, wenn die zweite Kraftstoffverbrauchsmenge bei dem zweiten Übersetzungsverhältnis kleiner ist als die erste Kraftstoffverbrauchsmenge bei dem ersten Übersetzungsverhältnis.

15. Gangwechselanzeigeverfahren nach Anspruch 11, wobei, wenn die Kraftstoffzugabe zum Regenerieren des Reinigers bei dem ersten Übersetzungsverhältnis durchgeführt wird und die Kraftstoffzugabe zum Regenerieren des Reinigers bei dem zweiten Übersetzungsverhältnis nicht durchgeführt wird, der Schritt, in dem der Wechsel zu dem zweiten Übersetzungsverhältnis angezeigt wird, die zweite Kraftstoffverbrauchsmenge bei dem ersten Übersetzungsverhältnis mit der ersten Kraftstoffverbrauchsmenge bei dem zweiten Gangwechselverhältnis vergleicht und den Wechsel zu dem zweiten Übersetzungsverhältnis anzeigt, wenn die erste Kraftstoffverbrauchsmenge bei dem zweiten Übersetzungsverhältnis kleiner ist als die zweiten Kraftstoffverbrauchsmenge bei dem ersten Übersetzungsverhältnis.

## Revendications

1. Indicateur (1000) de changement de vitesse pour une transmission (30) où une vitesse est changée selon une opération d'un conducteur, **caractérisé par** le fait de comprendre :
un moyen (1030) permettant de déterminer, pour chacun d'un premier rapport de vitesse et d'un deuxième rapport de vitesse de la transmission, si une addition de carburant est effectuée pour régénérer un épurateur qui purifie un gaz d'échappement à partir d'un moteur ;
un moyen (1041) permettant de calculer, pour chacun du premier rapport de vitesse et du deuxième rapport de vitesse, une première quantité de consommation de carburant du moteur dans un cas où l'addition de carburant n'est pas effectuée pour régénérer l'épurateur ;
un moyen (1042) permettant de calculer, pour chacun du premier rapport de vitesse et du deuxième rapport de vitesse, une deuxième quantité de consommation de carburant du moteur dans un cas où l'addition de carburant est effectuée pour régénérer l'épurateur ; et
un moyen (1050) d'indication permettant de comparer, lorsqu'un rapport de vitesse courante de la transmission est le premier rapport de vitesse, une quantité parmi la première quantité de consommation de carburant et la deuxième quantité de consommation de carburant dans le premier rapport de vitesse avec une quantité parmi la première quantité de consommation de carburant et la deuxième quantité de consommation de carburant dans le deuxième rapport de vitesse, et d'indiquer au conducteur un passage à partir du premier rapport de vitesse au deuxième rapport de vitesse.

2. Indicateur de changement de vitesse selon la revendication 1, dans lequel, lorsque l'addition de carburant est effectuée pour régénérer l'épurateur à la fois dans le premier rapport de vitesse et le deuxième rapport de vitesse, le moyen d'indication compare la deuxième quantité de consommation de carburant dans le premier rapport de vitesse avec la deuxième quantité de consommation de carburant dans le deuxième rapport de vitesse, et indique le passage au deuxième rapport de vitesse lorsque la deuxième quantité de consommation de carburant dans le deuxième rapport de vitesse est inférieure à la deuxième quantité de consommation de carburant dans le premier rapport de vitesse.

3. Indicateur de changement de vitesse selon la revendication 1, dans lequel, lorsque l'addition de carburant est effectuée pour ne pas régénérer l'épurateur ni dans le premier rapport de vitesse ni dans le deuxième rapport de vitesse, le moyen d'indication compare la première quantité de consommation de carburant dans le premier rapport de vitesse avec la première quantité de consommation de carburant dans le deuxième rapport de vitesse, et indique le passage au deuxième rapport de vitesse lorsque la première quantité de consommation de carburant dans le deuxième rapport de vitesse est inférieure à la première quantité de consommation de carburant dans le premier rapport de vitesse.

4. Indicateur de changement de vitesse selon la revendication 1, dans lequel, lorsque l'addition de carburant n'est pas effectuée pour régénérer l'épurateur dans le premier rapport de vitesse et l'addition de carburant est effectuée pour régénérer l'épurateur dans le deuxième rapport de vitesse, le moyen d'indication compare la première quantité de consommation de carburant dans le premier rapport de vitesse avec la deuxième quantité de consommation de carburant dans le deuxième rapport de vitesse, et indique le passage au deuxième rapport de vitesse lorsque la deuxième quantité de consommation de carburant dans le deuxième rapport de vitesse est inférieure à la première quantité de consommation de carburant dans le premier rapport de vitesse.

5. Indicateur de changement de vitesse selon la revendication 1, dans lequel, lorsque l'addition de carburant est effectuée pour régénérer l'épurateur dans le premier rapport de vitesse et l'addition de carburant n'est pas effectuée pour régénérer l'épurateur dans le deuxième rapport de vitesse, le moyen d'indication compare la deuxième quantité de consommation de carburant dans le premier rapport de vitesse avec la première quantité de consommation de carburant dans le deuxième rapport de vitesse, et indique le passage au deuxième rapport de vitesse lorsque la première quantité de consommation de carburant dans le deuxième rapport de vitesse est inférieure à la deuxième quantité de consommation de carburant dans le premier rapport de vitesse.

6. Indicateur de changement de vitesse selon l'une quelconque des revendications 1 à 5, comprenant en outre :
une mémoire qui stocke un diagramme de changement défini par des angles d'accélérateur et des vitesses de véhicules en tant que paramètres ; et
un moyen permettant de déterminer un rapport de vitesse cible comme étant le deuxième rapport de vitesse sur la base du diagramme de changement.

7. Indicateur de changement de vitesse selon l'une quelconque des revendications 1 à 5, comprenant en outre un moyen permettant de déterminer si une régénération de l'épurateur est effectuée, où le moyen d'indication compare la première quantité de consommation pour le premier rapport de vitesse et la première quantité de consommation pour le deuxième rapport de vitesse, lorsqu'on détermine que la régénération de l'épurateur n'est pas effectuée.

8. Indicateur de changement de vitesse selon l'une quelconque des revendications 1 à 5, dans lequel on détermine si l'addition de carburant est effectuée dans le premier rapport de vitesse selon une température courante du gaz d'échappement, et on détermine si l'addition de carburant est effectuée dans le deuxième rapport de vitesse selon une température du gaz d'échappement dans le deuxième rapport de vitesse, estimée sur la base d'une carte définie par la température de gaz d'échappement, le rapport de vitesse courante et le deuxième rapport de vitesse en tant que paramètres, est inférieure à la valeur seuil.

9. Indicateur de changement de vitesse selon l'une quelconque des revendications 1 à 5, dans lequel la première quantité de consommation de carburant dans chacun du premier rapport de vitesse et du deuxième rapport de vitesse est calculée selon des cartes respectivement préparées pour le premier rapport de vitesse et le deuxième rapport de vitesse, et définies par un couple de sortie du moteur et une vitesse de rotation du moteur en tant que paramètres.

10. Indicateur de changement de vitesse selon l'une quelconque des revendications 1 à 5, dans lequel le moyen d'indication indique le passage au deuxième rapport de vitesse en utilisant une lampe témoin de passage à la vitesse supérieure et une lampe témoin de passage à la vitesse inférieure.

11. Procédé d'indication de changement de vitesse destiné à une transmission où une vitesse est changée selon une opération d'un conducteur, **caractérisé par** le fait de comprendre :
une étape consistant à déterminer, pour chacun d'un premier rapport de vitesse et d'un deuxième rapport de vitesse, si l'addition de carburant est effectuée pour régénérer un épurateur qui purifie un gaz d'échappement à partir d'un moteur ;
une étape consistant à calculer, pour chacun du premier rapport de vitesse et du deuxième rapport de vitesse, une première quantité de consommation de carburant du moteur dans un cas où l'addition de carburant n'est pas effectuée pour régénérer l'épurateur ;
une étape consistant à calculer, pour chacun du premier rapport de vitesse et du deuxième rapport de vitesse, une deuxième quantité de consommation de carburant du moteur dans un cas où l'addition de carburant est effectuée pour régénérer l'épurateur ; et
une étape consistant à indiquer un passage au deuxième rapport de vitesse au conducteur en comparant, lorsqu'une vitesse courante de la transmission est le premier rapport de vitesse, l'une de la première quantité de consommation de carburant et de la deuxième quantité de consommation de carburant dans le premier rapport de vitesse avec l'une de la première quantité de consommation de carburant et de la deuxième quantité de consommation de carburant dans le deuxième rapport de vitesse.

12. Procédé d'indication de changement de vitesse selon la revendication 11, dans lequel, lorsque l'addition de carburant est effectuée pour régénérer l'épurateur à la fois dans le premier rapport de vitesse et le deuxième rapport de vitesse, l'étape consistant à indiquer le passage au deuxième rapport de vitesse compare la deuxième quantité de consommation de carburant dans le premier rapport de vitesse avec la deuxième quantité de consommation de carburant dans le deuxième rapport de vitesse, et indique le passage au deuxième rapport de vitesse lorsque la deuxième quantité de consommation de carburant dans le deuxième rapport de vitesse est inférieure à la deuxième quantité de consommation de carburant dans le premier rapport de vitesse.

13. Procédé d'indication de changement de vitesse selon la revendication 11, dans lequel, lorsque l'addition de carburant est effectuée pour ne pas régénérer l'épurateur ni dans le premier rapport de vitesse ni le deuxième rapport de vitesse, l'étape consistant à indiquer le passage au deuxième rapport de vitesse compare la première quantité de consommation de carburant dans le premier rapport de vitesse avec la première quantité de consommation de carburant dans le deuxième rapport de vitesse, et indique le passage au deuxième rapport de vitesse lorsque la première quantité de consommation de carburant dans le deuxième rapport de vitesse est inférieure à la première quantité de consommation de carburant dans le premier rapport de vitesse.

14. Procédé d'indication de changement de vitesse selon la revendication 11, dans lequel, lorsque l'addition de carburant n'est pas effectuée pour régénérer l'épurateur dans le premier rapport de vitesse et l'addition de carburant est effectuée pour régénérer l'épurateur dans le deuxième rapport de vitesse, l'étape consistant à indiquer le passage au deuxième rapport de vitesse compare la première quantité de consommation de carburant dans le premier rapport de vitesse avec la deuxième quantité de consommation de carburant dans le deuxième rapport de vitesse, et indique que le passage au deuxième rapport de vitesse est indiqué lorsque la deuxième quantité de consommation de carburant dans le deuxième rapport de vitesse est inférieure à la première quantité de consommation de carburant dans le premier rapport de vitesse.

15. Procédé d'indication de changement de vitesse selon la revendication 11, dans lequel, lorsque l'addition de carburant est effectuée pour régénérer l'épurateur dans le premier rapport de vitesse et l'addition de carburant n'est pas effectuée pour régénérer l'épurateur dans le deuxième rapport de vitesse, l'étape consistant à indiquer le passage au deuxième rapport de vitesse compare la deuxième quantité de consommation de carburant dans le premier rapport de vitesse avec la première quantité de consommation de carburant dans le deuxième rapport de vitesse, et indique le passage au deuxième rapport de vitesse lorsque la première quantité de consommation de carburant dans le deuxième rapport de vitesse est inférieure à la deuxième quantité de consommation de carburant dans le premier rapport de vitesse.
